# EUROPEAN PATENT SPECIFICATION

(11) **EP 4 047 232 B1**
(45) Date of publication and mention of the grant of the patent: **18.06.2025**
(21) Application number: 22156173.1
(22) Date of filing: 10.02.2022
(51) Int. Cl.: F16D 3/32

(54) **SPRING GUIDED DOUBLE CARDAN JOINT**
FEDERGEFÜHRTES DOPPEL-KARDANGELENK
DOUBLE JOINT DE CARDAN GUIDÉ À RESSORT

(30) Priority: 18.02.2021 US 202163150611 P; 07.02.2022 US 202217665843
(43) Date of publication of application: 24.08.2022
(73) Proprietor: VOLVO CAR CORPORATION, 405 31 Göteborg (SE)
(72) Inventor: KLOMP, Matthijs, 405 31 GÖTEBORG (SE)
(74) Representative: Kransell & Wennborg KB

(56) References cited:
- DE-A1- 4 141 325
- JP-A- H1 037 974
- JP-A- S63 120 919
- US-A- 4 075 871

## Description

### TECHNICAL FIELD

The present invention relates generally to the automotive field. More particularly, the present invention relates to a double cardan joint for coupling two drive shafts together and that includes a spring component positioned between two universal joints and that is adapted to guide and center the double cardan joint to maintain a bend of the double cardan joint in the middle thereof and to keep the bend angle divided between the two universal joints.

### BACKGROUND

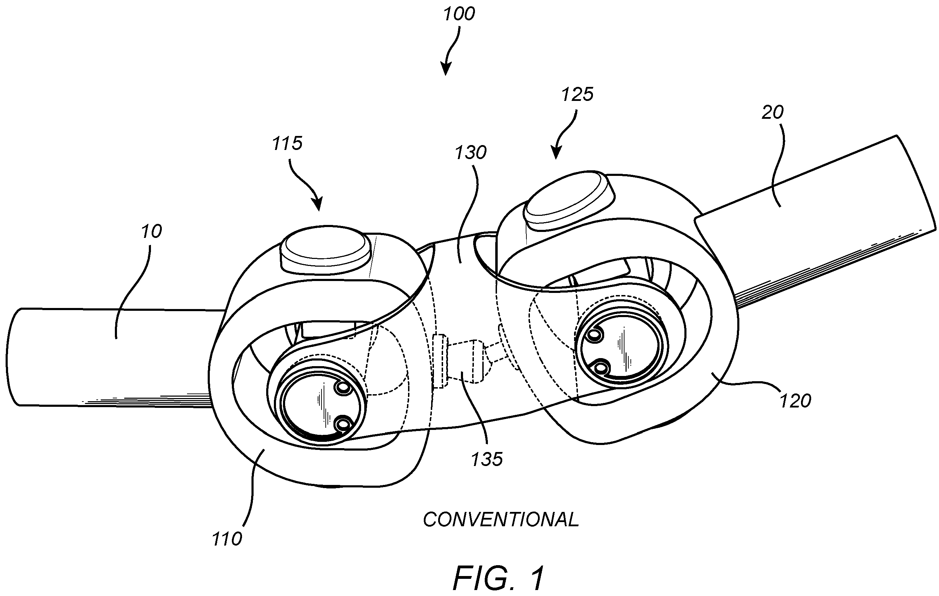

Double cardan joints are adapted to transfer rotation between two non-parallel shafts. As can be seen in FIG. 1, which illustrates a conventional double cardan joint 100, the conventional double cardan joint 100 includes two universal joints connected between an input shaft 10 and an output shaft 20. The conventional double cardan joint 100 includes an input yoke 110 connected to a center yoke 130 (often referred to as an H yoke) via an input cross-member 115 (forming a first universal joint) and an output yoke 120 connected to the center yoke 130 via an output cross-member 125 (forming a second universal joint).

The conventional double cardan joint 100 is a complex joint that includes an aligning ball-joint 135, such as a spherical needle bearing, that centers and aligns the double cardan joint 100. However, the aligning ball-joint 135 is relatively expensive and requires grease to function. As the grease can get contaminated, the conventional double cardan joint 100 is typically covered by a sleeve (not illustrated) to seal the double cardan joint 100 to prevent contaminants, such as water and dust, from reaching the aligning ball-joint 135. Such sleeves add further costs to a conventional double cardan joint 100.

Furthermore, in the event of contamination of the grease, the conventional double cardan joint 100 has to be disassembled to replace the contaminated grease.

The above-described background relating to double cardan joints is merely intended to provide a contextual overview of some current issues and is not intended to be exhaustive. Other contextual information may become apparent to those of ordinary skill in the art upon review of the following description of exemplary embodiments. DE 41 41 325 A1 describes a double cardan elastically centered with a conventional double cardan formed by an input shaft, two annular cardan crosses, a double fork and an output shaft, and a centering device and JP H10 37974 A describes a constant velocity universal joint comprising an aligning disc 4 provided with a socket part 27 having a cylindrical hole for rotatably supporting the spherical projections 7a, 7a of the pins 7 of pinyokes 1A, 1B, and moreover a compression coil spring 50 to elastically support the spherical projections la, la is provided inside the cylindrical hole.

### SUMMARY

The present invention generally provides a double cardan joint with a resilient member positioned between and coupling the universal joints of the double cardan joint as set out in the appended set of claims. The resilient member is adapted to support the input and output shafts and is adapted to center and align the double cardan joint.

By positioning the resilient member between the universal joints to center and align the double cardan joint, the conventional aligning ball-joint is not necessary. As such, the total cost of the double cardan joint is significantly reduced due to the removal of the expensive aligning ball-joint. Furthermore, the resilient member does not require the same sealing considerations as the aligning ball-joint since the resilient member does not require grease. As such, the sleeve required for sealing the conventional double cardan joint is not necessary, leading to further savings.

The present invention provides a double cardan joint assembly, including: an input yoke; an input cross-member coupled to the input yoke; an output yoke; an output cross-member coupled to the output yoke; a center yoke coupled to the input cross-member forming an input universal joint with the input yoke and the input cross-member and coupled to the output cross-member forming an output universal joint with the output yoke and the output cross-member; and a resilient member positioned between the input universal joint and the output universal joint, the resilient member adapted to center and align the double cardan joint assembly. The resilient member spans between an input arc guard of the input yoke and an output arc guard of the output yoke. Alternatively, in an example not being part of the present invention, the resilient member spans between the input cross-member and the output cross-member. In such case, the resilient member spans between the input cross-member and the output cross-member through the input arc guard of the input yoke and the output arc guard of the output yoke. In one embodiment, the resilient member includes one or more of a linear spring, a coil spring, and a wave spring. In another embodiment, the resilient member includes an elastic component. Optionally, the resilient member includes a combination of elastic and rigid components.

In another illustrative embodiment, the present invention provides a shaft assembly, including: an input shaft; an output shaft; and a double cardan joint coupling the input shaft to the output shaft. The double cardan joint includes an input yoke; an input cross-member coupled to the input yoke; an output yoke; an output cross-member coupled to the output yoke; a center yoke coupled to the input cross-member forming an input universal joint with the input yoke and the input cross-member and coupled to the output cross-member forming an output universal joint with the output yoke and the output cross-member; and a resilient member positioned between the input universal joint and the output universal joint, the resilient member adapted to center and align the double cardan joint assembly. The resilient member spans between an input arc guard of the input yoke and an output arc guard of the output yoke. Alternatively, in an example not being part of the present invention, the resilient member spans between the input cross-member and the output cross-member. In such case, the resilient member spans between the input cross-member and the output cross-member through the input arc guard of the input yoke and the output arc guard of the output yoke. In one embodiment, the resilient member includes one or more of a linear spring, a coil spring, and a wave spring. In another embodiment, the resilient member includes an elastic component. Optionally, the resilient member includes a combination of elastic and rigid components.

The present invention also provides a method for manufacturing a double cardan joint assembly, the method including: providing an input yoke; providing an input cross-member coupled to the input yoke; providing an output yoke; providing an output cross-member coupled to the output yoke; coupling a center yoke to the input cross-member forming an input universal joint with the input yoke and the input cross-member; coupling the center yoke to the output cross-member forming an output universal joint with the output yoke and the output cross-member; and positioning a resilient member between the input universal joint and the output universal joint, the resilient member adapted to center and align the double cardan joint assembly. The resilient member spans between an input arc guard of the input yoke and an output arc guard of the output yoke. Alternatively, in an example not being part of the present invention, the resilient member spans between the input cross-member and the output cross-member. In such case, the resilient member spans between the input cross-member and the output cross-member through the input arc guard of the input yoke and the output arc guard of the output yoke. In one embodiment, the resilient member includes one or more of a linear spring, a coil spring, and a wave spring. In another embodiment, the resilient member includes an elastic component. Optionally, the resilient member includes a combination of elastic and rigid components.

### BRIEF DESCRIPTION OF THE DRAWINGS

The present invention is illustrated and described herein with reference to the various drawings, in which like reference numbers are used to denote like system components/method steps, as appropriate, and in which:
FIG. 1 is a schematic illustration of a conventional double cardan joint with a ball-and-socket joint disposed between two universal joints;
FIG. 2 is a schematic illustration of one embodiment of the double cardan joint of the present invention;
FIG. 3 is a schematic illustration of an embodiment of the double cardan joint not being part of the present invention; and
FIG. 4 is a schematic illustration of a further embodiment of the double cardan joint of the present invention.

### DETAILED DESCRIPTION

Again, the present invention relates to a double cardan joint with a resilient member positioned between the universal joints of the double cardan joint, which is adapted to center and align the double cardan joint. The resilient member replaces the need for an aligning ball-joint used in conventional double cardan joints.

By positioning the resilient member between the universal joints to center and align the double cardan joint, the complexity of the double cardon joint is reduced and the cost of the double cardan joint is significantly reduced. First, the conventional, expensive aligning ball-joint is not required. Second, without requiring grease, the resilient member does not require the same sealing considerations as the aligning ball-joint. As such, the sleeve required for sealing the conventional double cardan joint is also not required, resulting in further savings.

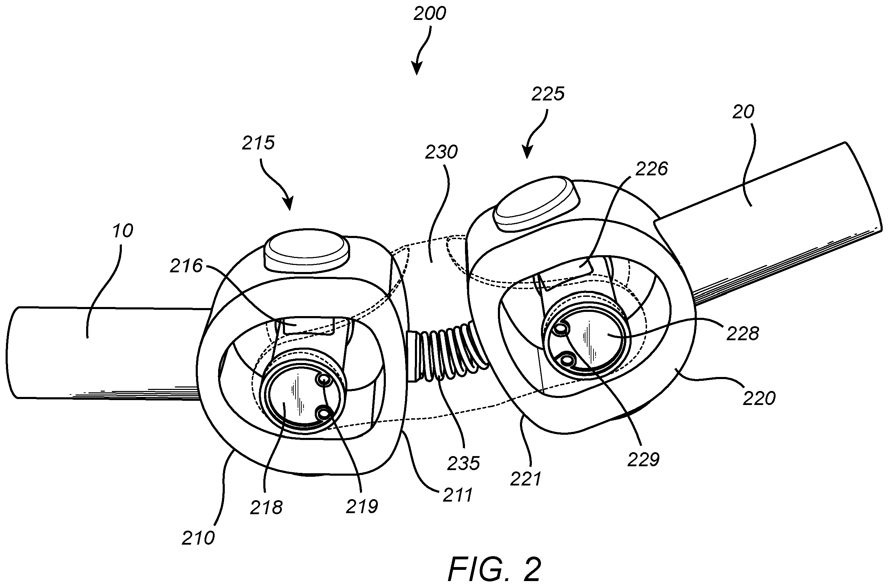

FIG. 2 is a schematic illustration of one embodiment of the double cardan joint 200 of the present invention. Referring to FIG. 2, the double cardan joint 200 includes an input yoke 210, an input cross-member 215, a center yoke 230, an output yoke 220, an output cross-member 225, and a resilient member 235 disposed between the input yoke 210 and the output yoke 220.

The input yoke 210 is adapted to be disposed at an end of an input shaft 10. The input yoke 210 can be coupled to or unitarily formed with the input shaft 10. The input yoke 210 is adapted to couple with the center yoke 230 via the input cross-member 215, forming an input universal joint. The input yoke 210 couples to the input cross-member 215 at 90 degrees relative to the coupling between the center yoke 230 and the input cross-member 225. The input cross-member 215 includes orthogonal arms 216 adapted to couple with the input yoke 210 and the center yoke 230. Caps 218 are positioned over the arms 216 to secure the arms 216 to the respective yoke and retaining devices 219, such as retention clips, are positioned to secure the caps 218 in position relative to the respective yoke. The input cross-member 215 thereby provides relative movement between the input shaft 10 and the center yoke 230 along two orthogonal axes. The input shaft 10 and input yoke 210 may also have a degree of rotational freedom. Fewer degrees of motion freedom may also be utilized.

The output yoke 220 is adapted to be disposed at an end of an output shaft 20. The output yoke 220 can be coupled to or unitarily formed with the output shaft 20. The output yoke 220 is adapted to couple with the center yoke 230 via the output cross-member 225, forming an output universal joint. The output yoke 220 couples to the output cross-member 225 at 90 degrees relative to the coupling between the center yoke 230 and the output cross-member 225. The output cross-member 225 includes orthogonal arms 226 adapted to couple with the output yoke 220 and the center yoke 230. Caps 228 are positioned over the arms 226 to secure the arms 226 to the respective yoke and retaining devices 229, such as retention clips, are positioned to secure the caps 228 in position relative to the respective yoke. The output cross-member 225 thereby optionally provides relative movement between the output shaft 20 and the center yoke 230 along two orthogonal axes. The output shaft 20 and output yoke 220 may also have a degree of rotational freedom. Fewer degrees of motion freedom may also be utilized.

The resilient member 235 is adapted to support the input shaft 10 and the output shaft 20. The resilient member 235 is also adapted to center and align the double cardan joint 200. By centering and aligning the double cardan joint 200, the angles of the input universal joint and the output universal joint are the same, such that any variation of angular velocity that occurs in the input universal joint is essentially canceled out by the variation in angular velocity that occurs in the output universal joint.

The resilient member 235 includes one or more resilient components, such as a linear spring, a coil spring, a wave spring, an elastic component, and/or the like. In the embodiment illustrated in FIG. 2, the resilient member 235 includes a coil spring spanning between an input arc guard 211 of the input yoke 210 and an output arc guard 221 of the output yoke 220. These arc guards 211 and 221 are designed to protect the associated cross-members 215 and 225 as well as provide structural stability to the associated universal joints. In embodiments, each of the input arc guard 211 and the output arc guard 221 includes a spring seat that is adapted to receive an end of the resilient member 235.

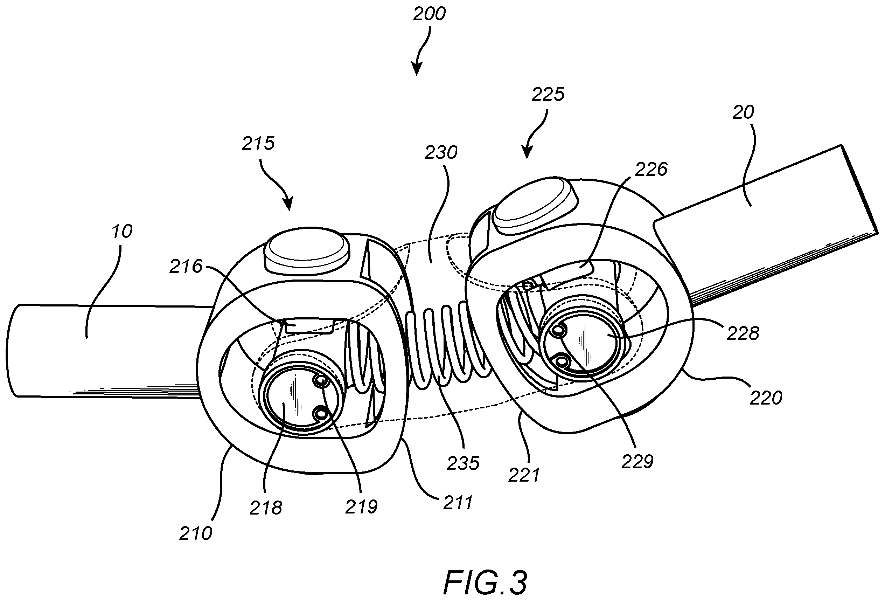

FIG. 3 is a schematic illustration of an embodiment of the double cardan joint 200 not being part of the present invention. In the embodiment illustrated in FIG. 3, the resilient member 235 includes a coil spring spanning between the input cross-member 215 and the output cross-member 225 directly, passing through the arc guard 211 or 221 associated with each universal joint. Each arc guard 211 and 221 is slotted for such purpose. In embodiments, each of the input cross-member 215 and the output cross-member 225 includes a spring seat that is adapted to receive an end of the resilient member 235.

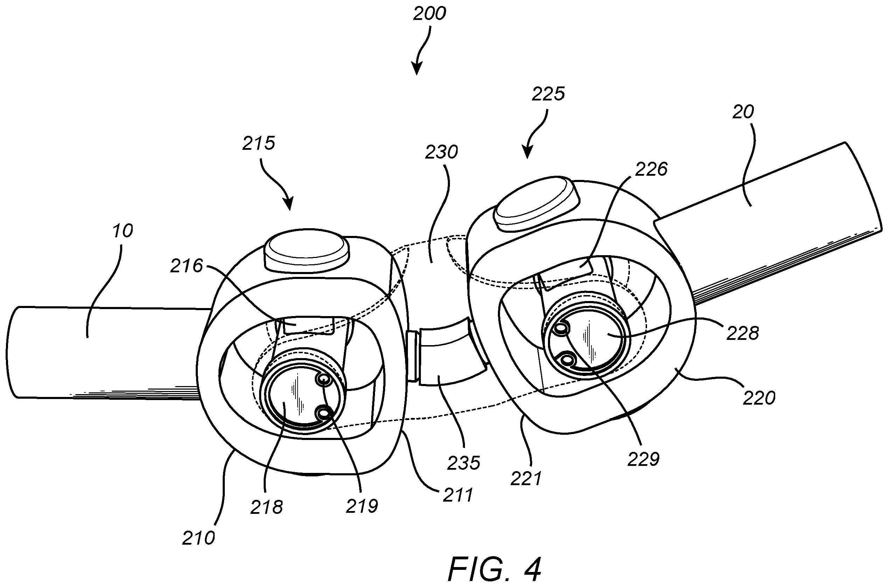

FIG. 4 is a schematic illustration of a further embodiment of the double cardan joint 200 of the present invention. In the embodiment illustrated in FIG. 4, the resilient member 235 includes an elastic component, such as a flexible rubber component, spanning between the input arc guard 211 of the input yoke 210 and the output arc guard 221 of the output yoke 220.

While the embodiments in FIGS. 2-4 illustrate a single component for the resilient member 235, in some embodiments, the resilient member 235 includes multiple resilient components. In further embodiments, the resilient member 235 includes a combination of resilient and rigid components.

Although the present invention is illustrated and described herein with reference to preferred embodiments and specific examples thereof, it will be readily apparent to those of ordinary skill in the art that other embodiments and examples may perform similar functions and/or achieve like results.

## Claims

1. A double cardan joint assembly (200), comprising:
an input yoke (210);
an input cross-member (215) coupled to the input yoke (210);
an output yoke (220);
an output cross-member (225) coupled to the output yoke (220); and
a center yoke (230) coupled to the input cross-member (215) forming an input universal joint with the input yoke (210) and the input cross-member (215) and coupled to the output cross-member (225) forming an output universal joint with the output yoke (220) and the output cross-member (225); **characterized by**
a resilient member (235) positioned between the input universal joint and the output universal joint, the resilient member (235) adapted to center and align the double cardan joint assembly (200), wherein the resilient member (235) spans between an input arc guard (211) of the input yoke (210) and an output arc guard (221) of the output yoke (220).

2. The double cardan joint assembly (200) of claim 1, wherein the resilient member (235) comprises one or more of a linear spring, a coil spring, and a wave spring.

3. The double cardan joint assembly (200) of claim 1, wherein the resilient member (235) comprises an elastic component.

4. The double cardan joint assembly (200) of claim 1, wherein the resilient member (235) comprises a combination of elastic and rigid components.

5. A method for manufacturing a double cardan joint assembly (200), the method comprising:
providing an input yoke (210);
providing an input cross-member (215) coupled to the input yoke (210);
providing an output yoke (220);
providing an output cross-member (225) coupled to the output yoke (220);
coupling a center yoke (230) to the input cross-member (215) forming an input universal joint with the input yoke (210) and the input cross-member (215); and
coupling the center yoke (230) to the output cross-member (225) forming an output universal joint with the output yoke (220) and the output cross-member (225);
**characterized by** positioning a resilient member (235) between the input universal joint and the output universal joint, the resilient member (235) adapted to center and align the double cardan joint assembly (200), wherein the resilient member (235) spans between an input arc guard (211) of the input yoke (210) and an output arc guard (221) of the output yoke (220).

6. The method of claim 5, wherein the resilient member (235) comprises one or more of a linear spring, a coil spring, and a wave spring.

7. The method of claim 5, wherein the resilient member (235) comprises an elastic component.

8. The method of claim 5, wherein the resilient member (235) comprises a combination of elastic and rigid components.

## Patentansprüche

1. Doppelkardangelenkanordnung (200), umfassend:
eine Eingangsgabel (210);
einen Eingangsquerträger (215), der mit der Eingangsgabel (210) gekoppelt ist;
eine Ausgangsgabel (220);
einen Ausgangsquerträger (225), der mit der Ausgangsgabel (220) gekoppelt ist; und
eine Mittelgabel (230), die mit dem Eingangsquerträger (215) gekoppelt ist, wodurch ein Eingangskreuzgelenk mit der Eingangsgabel (210) und dem Eingangsquerträger (215) gebildet wird, und mit dem Ausgangsquerträger (225) gekoppelt ist, wodurch ein Ausgangskreuzgelenk mit der Ausgangsgabel (220) und dem Ausgangsquerträger (225) gebildet wird; **gekennzeichnet durch**
ein federndes Element (235), das zwischen dem Eingangskreuzgelenk und dem Ausgangskreuzgelenk positioniert ist, wobei das federnde Element (235) dazu ausgelegt ist, die Doppelkardangelenkanordnung (200) zu zentrieren und auszurichten, wobei sich das federnde Element (235) zwischen einem Eingangslichtbogenschutz (211) der Eingangsgabel (210) und einem Ausgangslichtbogenschutz (221) der Ausgangsgabel (220) erstreckt.

2. Doppelkardangelenkanordnung (200) nach Anspruch 1, wobei das federnde Element (235) eine lineare Feder und/oder eine Schraubenfeder und/oder eine Wellenfeder umfasst.

3. Doppelkardangelenkanordnung (200) nach Anspruch 1, wobei das federnde Element (235) eine elastische Komponente umfasst.

4. Doppelkardangelenkanordnung (200) nach Anspruch 1, wobei das federnde Element (235) eine Kombination aus elastischen und starren Komponenten umfasst.

5. Verfahren zum Herstellen einer Doppelkardangelenkanordnung (200), wobei das Verfahren Folgendes umfasst:
Bereitstellen einer Eingangsgabel (210);
Bereitstellen eines Eingangsquerträgers (215), der mit der Eingangsgabel (210) gekoppelt ist;
Bereitstellen einer Ausgangsgabel (220);
Bereitstellen eines Ausgangsquerträgers (225), der mit der Ausgangsgabel (220) gekoppelt ist;
Koppeln einer Mittelgabel (230) mit dem Eingangsquerträger (215), wodurch ein Eingangskreuzgelenk mit der Eingangsgabel (210) und dem Eingangsquerträger (215) gebildet wird; und
Koppeln der Mittelgabel (230) mit dem Ausgangsquerträger (225), wodurch ein Ausgangskreuzgelenk mit der Ausgangsgabel (220) und dem Ausgangsquerträger (225) gebildet wird;
**gekennzeichnet durch** Positionieren eines federnden Elements (235) zwischen dem Eingangskreuzgelenk und dem Ausgangskreuzgelenk, wobei das federnde Element (235) dazu ausgelegt ist, die Doppelkardangelenkanordnung (200) zu zentrieren und auszurichten, wobei sich das federnde Element (235) zwischen einem Eingangslichtbogenschutz (211) der Eingangsgabel (210) und einem Ausgangslichtbogenschutz (221) der Ausgangsgabel (220) erstreckt.

6. Verfahren nach Anspruch 5, wobei das federnde Element (235) eine lineare Feder und/oder eine Schraubenfeder und/oder eine Wellenfeder umfasst.

7. Verfahren nach Anspruch 5, wobei das federnde Element (235) eine elastische Komponente umfasst.

8. Verfahren nach Anspruch 5, wobei das federnde Element (235) eine Kombination aus elastischen und starren Komponenten umfasst.

## Revendications

1. Ensemble joint de cardan double (200), comprenant :
une chape d'entrée (210) ;
un élément transversal d'entrée (215) couplé à la chape d'entrée (210) ;
une chape de sortie (220) ;
un élément transversal de sortie (225) couplé à la chape de sortie (220) ; et
une chape centrale (230) couplée à l'élément transversal d'entrée (215) formant un joint universel d'entrée avec la chape d'entrée (210) et l'élément transversal d'entrée (215) et couplée à l'élément transversal de sortie (225) formant un joint universel de sortie avec la chape de sortie (220) et l'élément transversal de sortie (225) ; **caractérisé par**
un élément résilient (235) positionné entre le joint universel d'entrée et le joint universel de sortie, l'élément résilient (235) étant adapté pour centrer et aligner l'ensemble joint de cardan double (200), dans lequel l'élément résilient (235) s'étend entre une organe de protection arqué d'entrée (211) de la chape d'entrée (210) et un organe de protection arqué de sortie (221) de la chape de sortie (220).

2. Ensemble joint de cardan double (200) de la revendication 1, dans lequel l'élément résilient (235) comprend un ou plusieurs parmi un ressort linéaire, un ressort hélicoïdal, et un ressort ondulé.

3. Ensemble joint de cardan double (200) de la revendication 1, dans lequel l'élément résilient (235) comprend un composant élastique.

4. Ensemble joint de cardan double (200) de la revendication 1, dans lequel l'élément résilient (235) comprend une combinaison de composants élastique et rigide.

5. Procédé pour fabriquer un ensemble joint de cardan double (200), le procédé comprenant :
la fourniture d'une chape d'entrée (210) ;
la fourniture d'un élément transversal d'entrée (215) couplé à la chape d'entrée (210) ;
la fourniture d'une chape de sortie (220) ;
la fourniture d'un élément transversal de sortie (225) couplé à la chape de sortie (220) ;
le couplage d'une chape centrale (230) à l'élément transversal d'entrée (215) formant un joint universel d'entrée avec la chape d'entrée (210) et l'élément transversal d'entrée (215) ; et
le couplage de la chape centrale (230) à l'élément transversal de sortie (225) formant un joint universel de sortie avec la chape de sortie (220) et l'élément transversal de sortie (225) ;
**caractérisé par** le positionnement d'un élément résilient (235) entre le joint universel d'entrée et le joint universel de sortie, l'élément résilient (235) étant adapté pour centrer et aligner l'ensemble joint de cardan double (200), dans lequel l'élément résilient (235) s'étend entre un organe de protection arqué d'entrée (211) de la chape d'entrée (210) et un organe de protection arqué de sortie (221) de la chape de sortie (220).

6. Procédé de la revendication 5, dans lequel l'élément résilient (235) comprend un ou plusieurs parmi un ressort linéaire, un ressort hélicoïdal, et un ressort ondulé.

7. Procédé de la revendication 5, dans lequel l'élément résilient (235) comprend un composant élastique.

8. Procédé de la revendication 5, dans lequel l'élément résilient (235) comprend une combinaison de composants élastique et rigide.
